# EUROPÄISCHE PATENTSCHRIFT

(11) **EP 3 789 283 B1**
(45) Veröffentlichungstag und Bekanntmachung des Hinweises auf die Patenterteilung: **18.10.2023**
(21) Anmeldenummer: 20191606.1
(22) Anmeldetag: 18.08.2020
(51) Int. Cl.: B62J 23/00, B25H 1/00, B62H 3/00

(54) **TRANSPORTSICHERUNG**
TRANSPORT SECURING DEVICE
SÉCURITÉ DU TRANSPORT

(30) Priorität: 03.09.2019 DE 102019123573
(43) Veröffentlichungstag der Anmeldung: 10.03.2021
(73) Patentinhaber: B & W International GmbH, 49479 Ibbenbüren (DE)
(72) Erfinder: HAGEMANN, Sebastian, 48477 Hörstel (DE); BUß, Philipp, 48153 Münster (DE); HERZOG, Juri, 49545 Tecklenburg (DE); KUCH, Andreas, 49074 Osnabrück (DE); HIMPEL, Jannis, 49477 Ibbenbüren (DE); RATERING, Lea, 48493 Wettringen (DE)
(74) Vertreter: Gramm, Lins & Partner Patent- und Rechtsanwälte PartGmbB

(56) Entgegenhaltungen:
- CN-U- 2 115 991
- DE-A1-102012 017 858
- DE-U1-202004 005 126
- US-A1- 2013 062 379
- US-A1- 2017 001 673
- Bopworx: "How to attach your Fork Guard", , 23. Dezember 2020 (2020-12-23), XP055762515, Gefunden im Internet: URL:https://cdn.shopify.com/s/files/1/0240 /4804/2064/files/bopworx_fork_guard_instru ctions.pdf?335 [gefunden am 2020-12-23]

## Beschreibung

Die Erfindung betrifft eine Transportsicherung zum Schutz von Ausfallenden einer Radaufnahme eines Fahrrades, in der sich kein Laufrad befindet, wobei die Transportsicherung einen Abstandshalter zum Anordnen zwischen den Ausfallenden aufweist, wobei der Abstandshalter längenveränderlich ausgebildet ist und die Transportsicherung zwei Befestigungselemente zum Befestigen der Transportsicherung an jeweils einem der Ausfallenden aufweist, wobei wenigstens eines der Befestigungselemente an dem Abstandshalter mittels Formschlusselementen befestigbar ist, wobei das Befestigungselement über wenigstens ein Loch und der Abstandshalter über wenigstens einen Vorsprung verfügt.

Transportsicherungen mit längenveränderlich ausgebildeten Befestigungselementen sind beispielsweise aus der gattungsgemäßen

US 2013/062379 A1 oder der DE 20 2004 005 126 U1 bekannt. Eine andere Art Transportsicherung wird in der US 2017/001673 A1 beschrieben.

Für den Transport von Fahrrädern gibt es eine Reihe unterschiedlicher Lösungen, die als Stand der Technik bekannt sind. Insbesondere bei Flugreisen muss das Gepäckstück, in dem das Fahrrad transportiert werden soll, möglichst klein ausgebildet sein, da Stauraum insbesondere an Bord eines Flugzeuges begrenzt und damit teuer ist. Aus dem Stand der Technik sind eine Reihe von Taschen und Koffern bekannt, in die ein Fahrrad eingepackt werden kann, wozu es jedoch zumindest teilweise demontiert werden muss. Oftmals ist es ausreichend, die Laufräder, also das Vorderrad und das Hinterrad des Fahrrades sowie gegebenenfalls den Lenker vom Rahmen und dem Rest des Fahrrades abzubauen und getrennt in der Tasche oder dem Koffer zu positionieren. In einigen Ausführungsformen ist der Lenker in diesem Zustand über Bremszüge und/oder einen Zug der Gangschaltung mit dem Rahmen des Fahrrades verbunden.

Insbesondere bei Reisen, auf denen der Reisende sein Gepäck nicht ständig bei sich trägt und selbst für den Transport des Gepäcks zuständig ist, hat er keinen Überblick und insbesondere keine Kontrolle darüber, wie sein Gepäckstück behandelt wird. Das Gepäckstück ist starken mechanischen Belastungen und einwirkenden Kräften ausgesetzt, die aus unterschiedlichsten Richtungen auf das Gepäckstück und damit auch auf dessen Inhalt einwirken. Handelt es sich bei diesem Inhalt um den Rahmen eines Fahrrades und insbesondere eine Radaufnahme eines Fahrrades, in der sich kein Laufrad des Fahrrades mehr befindet, kann es zu ernsthaften Beschädigungen kommen. Wird das Gepäckstück beispielsweise in einem Stauraum, beispielsweise eines Flugzeuges, angeordnet ist es sehr wahrscheinlich, dass weitere Gepäckstücke und Koffer auf dem Gepäckstück, das das Fahrrad enthält, zu liegen kommen. Durch diese dauerhafte starke mechanische Belastung, beispielsweise Druck von oben oder von der Seite, können empfindliche Bauteile eines Fahrrades, beispielsweise eine Vorderradgabel, zusammengedrückt und verformt oder beschädigt werden. So kann beispielsweise eine Gabel aus Kohlefaserverbundmaterial Risse bekommen. Dies hat zur Folge, dass das Laufrad nicht mehr zwischen die Ausfallenden der Gabel, also der Radaufnahme eingesetzt werden kann.

Aus dem Stand der Technik sind verschiedene Transportsicherungen bekannt, die diesem Problem entgegenwirken sollen. Je nach verwendeter Achse, die das Laufrad aufweist, kommen unterschiedliche Transportsicherung zum Einsatz. Herkömmlicherweise sind die Räder von Fahrrädern mit Schrauben oder Schnellspanner ausgerüstet, durch die das jeweilige Laufrad zwischen den Ausfallenden der Radaufnahme angeordnet wird. Die Ausfallenden verfügen über eine in der Regel nach unten geöffnete U-Form, in die die jeweilige Achse des Laufrads eingesetzt wird. Über Schrauben oder den Schnellspanner kann das Laufrad so in dieser Form von Ausfallenden angeordnet werden. Problematisch ist dabei, dass es Radaufnahmen unterschiedlicher Spannweite gibt, die sich folglich im Abstand zwischen den beiden Ausfallenden unterscheiden. Daher müssen unterschiedliche Abstandshalter oder längenveränderlich ausgebildete Abstandshalter verwendet werden. Aus dem Stand der Technik sind Abstandshalter bekannt, die mehrere Elemente aufweisen, die in unterschiedlichen Positionen zueinander befestigt, beispielsweise in einander gesteckt werden können um auf unterschiedliche Abstände reagieren zu können. Diese werden herkömmlicherweise über Kabelbinder oder Gummibänder gegen Herausfallen gesichert. Nachteilig ist, dass diese Kabelbinder oder Gummibänder separate Bauteile sind, die entsprechend leicht verloren gehen können.

Bei Fahrrädern mit Steckachsen verfügt die Achse an einem Ende über ein Gewinde, das in ein entsprechendes gegen Gewinde am Ausfallende auf einer Seite der Radaufnahme eingeschraubt wird. Wird das Laufrad von einer derartigen Achse entfernt, kann die Steckachse wieder in die Ausfallenden der Radaufnahme eingebaut werden. Da sich nun jedoch kein Laufrad zwischen den beiden Ausfallenden befindet, wird durch die Steckachse kein wirksamer Schutz gegen einen von außen wirkenden Druck auf die beiden Ausfallenden erreicht. Die beiden Ausfallenden können noch immer zusammengedrückt und daher beschädigt und funktionsuntüchtig gemacht werden.

Der Erfindung liegt daher die Aufgabe zugrunde, eine Transportsicherung zum Schutz von Ausfallenden einer Radaufnahme eines Fahrrades so weiterzuentwickeln, dass sie universell einsetzbar und trotzdem leicht verwendbar ist.

Die Erfindung löst die gestellte Aufgabe durch eine Transportsicherung gemäß dem Oberbegriff des Anspruchs 1, die sich dadurch auszeichnet, dass der wenigstens eine Vorsprung einen Hals und einen Kopf aufweist, wobei der Kopf einen größeren Querschnitt als der Hals aufweist, wobei der Querschnitt des Kopfes trapezförmig, kreisförmig, oval, quadratisch oder dreieckig ist.

Mit einer erfindungsgemäßen Transportsicherung werden die Probleme aus dem Stand der Technik gelöst. Durch die längenveränderliche Ausgestaltung des Abstandshalters kann die erfindungsgemäße Transportsicherung für eine Vielzahl unterschiedlicher Radaufnahmen, die sich im Abstand der einzelnen Ausfallenden unterscheiden können, verwendet werden. Der Abstandshalter wird einfach auf die gewünschte Länge eingestellt, sodass die Transportsicherung verwendet werden kann. Die erfindungsgemäße Transportsicherung verfügt über zwei Befestigungselemente, sodass eine Befestigung auf beiden Seiten, also an beiden Ausfallenden der Radaufnahme, möglich ist. Dies ist unabhängig davon, welche Art der Radaufnahme und Achse verwendet wird. Eine Transportsicherung kann vorzugsweise sowohl für Laufräder mit Achsen verwendet werden, die durch Schrauben oder Schnellspanner an den Ausfallenden gehalten werden, als auch für Laufräder, die Steckachsen der oben beschriebenen Art aufweisen.

Vorzugsweise sind die Befestigungselemente an zwei einander gegenüberliegenden Enden des Abstandshalters angeordnet oder so ausgebildet, dass sie an diesen Enden angeordnet werden können. Auf diese Weise wird besonders einfach erreicht, dass der Abstandshalter zwischen den Ausfallenden der Radaufnahme angeordnet wird. Eine die Ausfallenden zusammendrückende Kraft würde dann über die Ausfallenden einen Druck auf den Abstandshalter in seiner Längsrichtung ausüben, dem er besonders einfach widerstehen kann. Besonders vorteilhafterweise schneidet die Längsrichtung des Abstandshalters die beiden Ausfallenden der Radaufnahme. Sie verläuft durch die Ausfallenden. Stellt man sich den Abstandshalter als einen Zylinder vor, der zwei Stirnflächen und eine Mantelfläche hat, liegen die Ausfallenden an den Stirnflächen des Zylinders an. Unabhängig von der Ausgestaltung des Abstandshalters ist es möglich, den Abstandshalter derart auszubilden, dass er innerhalb der Gabel, also der Radaufnahme, verschoben werden kann und in unterschiedlichen Positionen abgeordnet und bevorzugt fixiert werden kann. Auch dies wird im Rahmen der vorliegenden Erfindung unter dem Begriff "zwischen den Ausfallenden" verstanden.

In einer besonders bevorzugten Ausgestaltung ist wenigstens eines der Befestigungselemente derart an dem Abstandshalter angeordnet, dass eine Stirnfläche des Abstandshalters von dem Befestigungselement zumindest teilweise überdeckt wird. Dabei wird bevorzugt ein Teil des Befestigungselementes zwischen dem Abstandshalter und dem Ausfallende angeordnet, wenn die Transportsicherung mittels des Befestigungselementes an dem Ausfallende befestigt ist. Bevorzugt sind beide Befestigungselemente derart ausgebildet. Selbstverständlich ist es ausreichend, wenn das Befestigungselement derart ausgebildet ist, dass es in der beschriebenen Weise am Abstandshalter angeordnet werden kann. Besonders bevorzugt sind die Befestigungselemente lösbar am Abstandshalter befestigt oder befestigbar. Eine Stirnfläche des Abstandshalters ist eine den Abstandshalter abschließende Fläche, durch die seine Längsrichtung hindurchstößt. Der Abstandshalter hat vorzugsweise zumindest näherungsweise einen zylinderförmigen Aufbau mit zwei Stirnflächen und einer Mantelfläche.

Durch diese Positionierung der Befestigungselemente wird eine Polsterung erreicht, durch die die oftmals empfindlichen Ausfallenden der Radaufnahme geschützt werden. Der Abstandshalter selbst ist aus einem Material hergestellt, das in der Lage ist, den auftretenden Kräften möglichst lange zu widerstehen. Es muss folglich eine hohe Stabilität aufweisen und zumindest entlang der Längsrichtung des Abstandshalters eine möglichst kleine, bevorzugt jedoch gar keine Elastizität aufweisen. Es kann folglich als "hart" oder "steif" beschrieben werden. Der Kontakt eines derartigen Materials mit dem empfindlichen Material eines Ausfallendes der Radaufnahme birgt immer die Gefahr, dass beispielsweise der Lack des Ausfallendes beschädigt oder eine sonstige Beschädigung hervorgerufen werden kann. Um dies zu verhindern wird ein aus einem elastischen Material hergestellter Teil des Befestigungselementes so angeordnet, dass wenigstens eine Stirnfläche des Abstandshalters zumindest teilweise, bevorzugt jedoch vollständig überdeckt wird. Besonders bevorzugt werden beide Befestigungselemente so angeordnet.

Erfindungsgemäß ist wenigstens eines der Befestigungselemente an dem Abstandshalter mittels Formschlusselementen befestigbar, wobei das Befestigungselement über wenigstens ein Loch und der Abstandshalter über wenigstens einen Vorsprung verfügt. Auf diese Weise kann eine formschlüssige Verbindung zwischen dem Befestigungselement und dem Abstandshalter erreicht werden, die in der besonders bevorzugten Ausgestaltung lösbar ausgebildet ist. Selbstverständlich sind auch andere Befestigungsarten oder andere Formschlusselemente denkbar. In einer bevorzugten Ausgestaltung verfügt das Befestigungselement über ein erstes Loch an einem ersten Ende des Befestigungselementes. Mit diesem ersten Loch kann das Befestigungselement an einem ersten Vorsprung am Abstandshalter befestigt werden. Das Befestigungselement verfügt in dieser bevorzugten Ausgestaltung über zwei sich von diesem ersten Ende erstreckende Teilbereiche, die unterschiedlich lang ausgebildet sind und an dem jeweils gegenüberliegenden Ende jeweils wenigstens ein Loch aufweisen. Der kurze Teilbereich kann in dieser Ausführungsform mit dem am zweiten Ende dieses kurzen Teilbereiches angeordneten Loch an einem dafür vorgesehenen Vorsprung befestigt werden, der auf einer gegenüberliegenden Seite des Abstandshalters angeordnet ist. Diese beiden Vorsprünge befinden sich folglich am gleichen Ende des Abstandshalters entlang seiner Längsrichtung jedoch auf unterschiedlichen Seiten, also bevorzugt um 180° am Umfang des Abstandshalters versetzt. Wird nun der kurze Teilbereich des Befestigungselementes an den beiden Vorsprüngen befestigt, überdeckt er eine Stirnfläche des Abstandshalters zumindest teilweise, sodass die gewünschte polsternde Wirkung erreicht wird. Der lange Teilbereich hingegen verfügt ebenfalls am zweiten Ende über ein Loch, das bevorzugt am gleichen Vorsprung zu befestigen ist, wie das zweite Loch des kurzen Teilbereiches. Der lange Teilbereich wird dazu jedoch um eines der Ausfallenden der Radaufnahme herumgelegt. Bevorzugt verfügt der lange Teilbereich über mehrere Löcher an seinem zweiten Ende, um unterschiedlichen Größen, Stärken oder Dicken des jeweiligen Ausfallendes Rechnung tragen zu können.

In der erfindungsgemäßen Ausgestaltung verfügt wenigstens ein Vorsprung, bevorzugt jeder Vorsprung über einen Hals und einen Kopf. Der Kopf ist über den Hals mit dem Rest des Abstandshalters verbunden und weist einen größeren Querschnitt als der Hals auf. Es entsteht ein pilzartige Vorsprung mit einer Verjüngung im Bereich des Halses. Wird nun ein Loch des Befestigungselementes über diesen pilzartigen Vorsprung geschoben, muss das Loch aufgeweitet werden, damit der Kopf des Vorsprunges durch das Loch hindurchgeführt werden kann. Daher ist es von großem Vorteil, wenn das Befestigungselement aus einem elastischen Material besteht. Sobald der Kopf des Vorsprunges vollständig durch das Loch des Befestigungselementes hindurchgeschoben wurde, muss das Loch lediglich den Hals des Vorsprunges umgeben, sodass es sich aufgrund des geringeren Durchmessers des Halses entspannen kann. Auf diese Weise wird die formschlüssige Verbindung erreicht. Besonders bevorzugt ist der Querschnitt des Kopfes des Vorsprunges trapezförmig ausgebildet. Auf diese Weise lässt sich das Loch besonders einfach über den Vorsprung hinwegbewegen. Der Querschnitt kann auch kreisförmig, oval, quadratisch oder dreieckig ausgebildet sein.

Vorteilhafterweise verfügt der Abstandshalter über wenigstens zwei Elemente, die relativ zueinander längsverschieblich ausgebildet sind und in mehreren Positionen relativ zueinander verriegelbar sind. Auf diese Weise lässt sich die Länge des Abstandshalters besonders einfach verändern und sichern.

Besonders bevorzugt verfügt eines der Elemente über eine Mehrzahl von bevorzugt äquidistant angeordneten Öffnungen und das andere Element über eine Mehrzahl von bevorzugt äquidistant angeordneten Vorsprüngen. Die Öffnungen und Vorsprünge sind dabei so angeordnet, dass die Vorsprünge durch Rotieren des einen Elementes relativ zum zweiten Element um eine Längsachse mit den Öffnungen des anderen Elementes in Eingriff und außer Eingriff bringbar sind. Besonders bevorzugt sind die Öffnungen und die Vorsprünge dabei so ausgebildet, dass es zu einer Rastverbindung kommt, wenn die Vorsprünge mit den Öffnungen in Eingriff gebracht werden. Besonders bevorzugt wird diese Rastverbindung umso stärker, je weniger Öffnungen und Vorsprünge miteinander in Eingriff sind. Dies geschieht immer dann, wenn die beiden Elemente so relativ zueinander bewegt werden, dass die Gesamtlänge des Abstandshalters wächst. Die Öffnungen sind bevorzugt derart angeordnet und ausgerichtet, dass die Rastwirkung verstärkt wird, wenn ein Druck auf den Abstandshalter wirkt. Ein Druck ist dabei eine Kraft, die in Längsrichtung des Abstandshalter wirkt oder zumindest eine Komponente in dieser Richtung aufweist. Dadurch wird verhindert, dass der Abstandshalter in durch eine von außen wirkende Belastung durch einen Druck selbsttätig und unbeabsichtigt öffnen kann.

In einer bevorzugten Ausgestaltung weisen die Elemente Formschlusselemente, insbesondere Rastelemente, auf, die miteinander in Eingriff und außer Eingriff bringbar sind, ohne dass die Elemente relativ zueinander gedreht werden müssen.

Vorzugsweise sind die Befestigungselemente aus einem elastischen Material, insbesondere einem Silikon oder einem thermoplastischen Polyurethan (TPU) hergestellt. Der Abstandshalter und insbesondere die wenigstens zwei Elemente sind bevorzugt aus einem Spritzguss-fähigen Kunststoff, beispielsweise einem Polyamid, insbesondere PA66 hergestellt.

Mithilfe der beiliegenden Figuren wird nachfolgend ein Ausführungsbeispiel der vorliegenden Erfindung näher erläutert. Es zeigt
- Figur 1 -: einen Abstandshalter im entriegelten und im verriegelten Zustand,
- Figur 2 -: ein vergrößertes Detail aus einem Abstandshalter,
- Figur 3 -: ein Befestigungselement,
- Figur 4 -: eine Transportsicherung im teilweise montierten Zustand,
- Figur 5 und 6 -: Details des Abstandshalters.

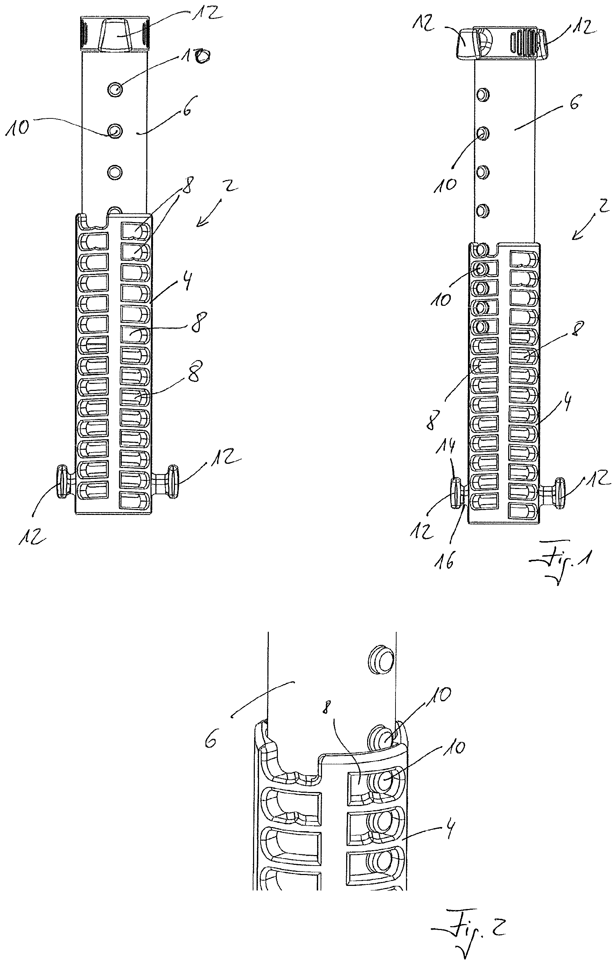

Figur 1 zeigt einen Abstandshalter 2, der ein erstes Element 4 und ein zweites Element 6 aufweist. Das erste Element 4 verfügt über eine Mehrzahl von äquidistant angeordneten Öffnungen 8. Das zweite Element 6 verfügt über eine Mehrzahl von Vorsprüngen 10, die ebenfalls äquidistant angeordnet sind. Man erkennt, dass die Abstände zwischen zwei benachbarten Vorsprüngen 10 deutlich größer sind als die Abstände zwischen zwei benachbarten Öffnungen 8. Der Abstand zwischen benachbarten Vorsprüngen 10 ist ein Vielfaches des Abstandes zwischen benachbarten Öffnungen 8, sodass trotz der unterschiedlichen Abstände alle Vorsprünge 10 des zweiten Elementes 6, die sich im Inneren des ersten Elementes 4 befinden, gleichzeitig in Öffnungen 8 eingreifen können. Dieser Zustand ist im rechten Teil der Figur 1 dargestellt. Man erkennt, dass das zweite Element 6 gegenüber der Darstellung im linken Teil der Figur 1 relativ zum ersten Element 4 verdreht wurde, sodass nun die Vorsprünge 10, die sich im Innern des ersten Elementes 4 befinden, in die dafür vorgesehenen Öffnungen 8 des ersten Elementes 4 eingreifen.

Sowohl das erste Element 4 als auch das zweite Element 6 verfügen über Vorsprünge 12, die jeweils über einen Kopf 14 und einen Hals 16 verfügen, wobei der Hals 16 einen kleineren Querschnitt als der Kopf 14 hat. Über diese Vorsprünge 12 können Löcher der Befestigungselemente gestülpt werden, sodass die Vorsprünge 12 durch diese Löcher hindurch ragen und es so zu einer formschlüssigen Verbindung kommt.

Figur 2 zeigt ein vergrößertes Detail des Abstandshalters 2. Man erkennt eine Öffnung 8 des ersten Elementes 4, in der sich ein Vorsprung 10 des zweiten Elementes 6 befindet. Man erkennt, dass der Rand der Öffnung 10 nicht glatt und gerade ausgebildet ist, sondern eine kleine Welle aufweist, die zu einer Verkleinerung des Querschnittes, in der gezeigten Darstellung also der Höhe, der Öffnung 8 führt. Wird nun das zweite Element 6 relativ zum ersten Element 4 um die gemeinsame Längsachse verdreht, muss der Vorsprung 10 diese Engstelle in der Öffnung 8 überwinden, bevor er mit der Öffnung 8 außer Eingriff gebracht werden kann und die beiden Elemente 4, 6 nicht mehr verriegelt sind.

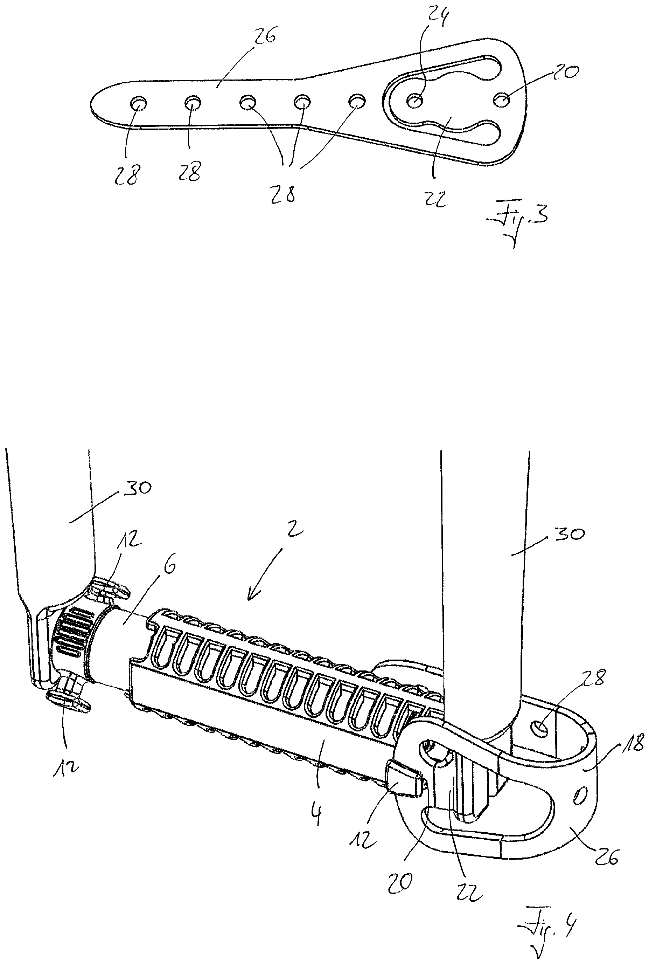

Figur 3 zeigt ein Befestigungselement 18. Es verfügt über ein erstes Loch 20, das in Figur 3 am rechten Ende des Befestigungselementes 18 angeordnet ist. Es kann verwendet werden, um über einen Vorsprung 12 gestülpt zu werden, bis der Kopf 14 des Vorsprunges 12 vollständig durch das erste noch 20 hindurchgeführt wurde. Das Befestigungselement 18 verfügt über einen kurzen Teilbereich 22, der an seinem dem ersten Loch 20 gegenüberliegenden Ende ein zweites Loch 24 aufweist. Auch dieses zweite Loch 24 kann verwendet werden, um den Kopf 14 eines Vorsprunges 12 hindurchzuführen. Dazu werden die beispielsweise in Figur 1 gezeigten Vorsprünge 12 verwendet, die an einem Ende des Abstandshalters 2, im gezeigten Ausführungsbeispiel also am ersten Element 4 oder am zweiten Element 6 angeordnet sind. Sie befinden sich auf gegenüberliegenden Seiten des Abstandshalters 2, sind jedoch im gleichen Ende angeordnet. Wird das erste Loch 20 und das zweite Loch 24 verwendet, die Vorsprünge 12 an einem Ende des Abstandshalters 2 zu überstülpen, erstreckt sich der Hauptteil des kurzen Teilbereich 22 über der entsprechenden Stirnseite, sodass es zu der bereits beschriebenen polsternden Wirkung kommt.

Das Befestigungselement 18 verfügt zudem über einen langen Teilbereich 26, der über mehrere zweite Löcher 28 verfügt. Eines dieser zweiten Löcher 28 wird verwendet, um den Vorsprung 12 in durchzuführen, der bereits durch das zweite Loch 24 geführt wurde. Da der langen Teilbereich 26 jedoch deutlich länger ausgebildet ist als der kurze Teilbereich 22 kann er zuvor um eines der Ausfallenden der Radaufnahme herumgeführt werden.

Figur 4 zeigt eine Transportsicherung im teilweise montierten Zustand. Zwischen zwei Enden 30 einer Gabel, an deren unteren Enden sich die Ausfallenden befinden, ist der Abstandshalter 2 mit dem ersten Element 4 und dem zweiten Element 6 positioniert. In Figur 4 befindet sich am Ende des ersten Elementes 4 eines der Befestigungselemente 18, wobei das erste Loch 20 des Befestigungselementes 18 bereits über den Vorsprung 12 des ersten Elementes 4 gestülpt wurde, sodass es zu einer Befestigung kommt. Zwischen dem Ende 30 der Gabel und einem Stirn Ende des ersten Elementes 4 des Abstandshalters 2 befindet sich der kurze Teilbereich 22, der auf diese Weise als Polster dient. Um das Befestigungselement 18 vollständig zum montieren muss noch eines der zweiten Löcher 28 über den in Figur 4 nicht dargestellten Vorsprung 12 auf der hinteren Seite gestülpt werden. Dies sollte bevorzugt so geschehen, dass der langen Teilbereich 26 möglichst straff am Ende 30 der Gabel anliegt. Durch die Haftreibung kommt es dann zur Befestigung der Transportsicherung an den Enden 30 der Gabel.

Man erkennt in Figur 4 dass die Vorsprünge 12 am ersten Element 4 und die Vorsprünge 12 am zweiten Element 6 gegeneinander verdreht sind. Im gezeigten Ausführungsbeispiel liegt im montierten Zustand zwischen den Vorsprüngen ein Winkel von 45°. Dies ist aus fertigungstechnischen Gründen von Vorteil und wird durch die elastischen Eigenschaften der Befestigungselemente 18 ermöglicht.

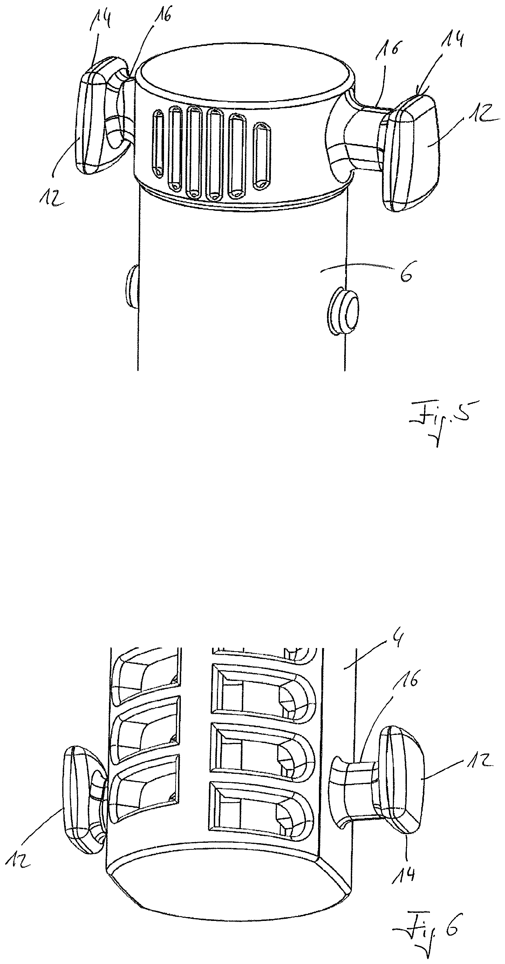

Die Figuren 5 und 6 zeigen vergrößerte Details des Abstandshalters 2. Figur 5 zeigt die Vorsprünge 12 am zweiten Element 6. Sie verfügen über den bereits beschriebenen Kopf 14 und den Hals 16, der einen kleineren Querschnitt als der Kopf 14 aufweist. Figur 6 zeigt die Darstellung der Vorsprünge 12, die am ersten Element 4 angeordnet sind. Auch diese verfügen über einen Kopf 14 und einen Hals 16, der einen kleineren Querschnitt als der Kopf aufweist. Sowohl in Figur 5 als auch in Figur 6 ist der rechts dargestellte Vorsprung 12 mit einem längeren Hals 16 ausgestattet als der links dargestellte Vorsprung 12. Bei der Montage der Transportsicherung wird das erste Loch 20 über den Vorsprung 12 gestülpt, der den kürzeren Hals 16, in den Figuren 5 und 6 also der linke Vorsprung 12. Über diesen Vorsprung 12 muss nur einmal das Befestigungselement 18 geführt werden. Auf der gegenüberliegenden Seite, auf der der Vorsprung 12 den längeren Hals 16 aufweist, wird hingegen bei der Montage der Transportsicherung sowohl das zweite Loch 24 als auch ein zweites Loch 28 gestülpt. Daher ist der Hals 16 länger.
- 2: Abstandshalter
- 4: erstes Element
- 6: zweites Element
- 8: Öffnung
- 10: Vorsprung
- 12: Vorsprung
- 14: Kopf
- 16: Hals
- 18: Befestigungselement
- 20: erstes Loch
- 22: kurzer Teilbereich
- 24: zweites Loch
- 26: langer Teilbereich
- 28: zweites Loch
- 30: Ende

## Patentansprüche

1. Transportsicherung zum Schutz von Ausfallenden einer Radaufnahme eines Fahrrades, in der sich kein Laufrad befindet, wobei die Transportsicherung einen Abstandshalter (2) zum Anordnen zwischen den Ausfallenden aufweist, wobei der Abstandshalter längenveränderlich ausgebildet ist und die Transportsicherung zwei Befestigungselemente (18) zum Befestigen der Transportsicherung an jeweils einem der Ausfallenden aufweist, wobei wenigstens eines der Befestigungselemente an dem Abstandshalter mittels Formschlusselementen befestigbar ist, wobei das Befestigungselement (18) über wenigstens ein Loch (20,24,28) und der Abstandshalter über wenigstens einen Vorsprung (12) verfügt **dadurch gekennzeichnet, dass** der wenigstens eine Vorsprung (12) einen Hals (16
) und einen Kopf (14) aufweist wobei der Kopf einen größeren Querschnitt als der Hals aufweist, wobei der Querschnitt des Kopfes trapezförmig, kreisförmig, oval, quadratisch oder dreieckig ist.

2. Transportsicherung nach Anspruch 1, **dadurch gekennzeichnet, dass** die Befestigungselemente an zwei einander gegenüberliegenden Enden des Abstandshalters angeordnet sind oder angeordnet werden können.

3. Transportsicherung nach Anspruch 1 oder 2, **dadurch gekennzeichnet, dass** wenigstens eines der Befestigungselemente derart an dem Abstandshalter angeordnet ist oder angeordnet werden kann, dass eine Stirnfläche des Abstandshalters von dem Befestigungselement zumindest teilweise überdeckt wird, wobei bevorzugt ein Teil des Befestigungselementes zwischen dem Abstandshalter und dem Ausfallende angeordnet ist, wenn die Transportsicherung mittels des Befestigungselementes an dem Ausfallende befestigt ist.

4. Transportsicherung nach einem der vorstehenden Ansprüche, **dadurch gekennzeichnet, dass** der Abstandshalter wenigstens zwei Elemente aufweist, die relativ zueinander längsverschieblich ausgebildet sind und in mehreren Positionen relativ zueinander verriegelbar und entriegelbar sind.

5. Transportsicherung nach Anspruch 4, **dadurch gekennzeichnet, dass** eines der Elemente eine Mehrzahl von bevorzugt äquidistant angeordneten Öffnungen und das andere Element eine Mehrzahl von bevorzugt äquidistant angeordneten Vorsprüngen aufweist, die derart angeordnet sind, dass die Vorsprünge durch Rotieren des einen Elementes relativ zu dem zweiten Element um eine Längsachse mit den Öffnungen in Eingriff und außer Eingriff bringbar sind.

6. Transportsicherung nach Anspruch 4, **dadurch gekennzeichnet, dass** die Elemente Formschlusselemente, insbesondere Rastelemente, aufweisen, die miteinander in Eingriff und außer Eingriff bringbar sind, ohne dass die Elemente relativ zueinander gedreht werden müssen.

7. Transportsicherung nach einem der vorstehenden Ansprüche, **dadurch gekennzeichnet, dass** die Befestigungselemente aus einem elastischen Material, insbesondere Silikon oder TPU hergestellt sind.

8. Transportsicherung nach einem der vorstehenden Ansprüche, **dadurch gekennzeichnet, dass** der Abstandshalter aus einem Spritzguss-fähigen Kunststoff, bevorzugt einem Polyamid, besonders bevorzugt aus PA66 hergestellt ist.

## Claims

1. A transport lock for protecting dropouts of a wheel receiver of a bicycle in which there is no running wheel, the transport lock comprising a spacer (2) to be arranged between the dropouts, the spacer being designed to be length-adjustable and the transport lock comprising two securing elements (18) for securing the transport lock to one of the dropouts in each case, wherein at least one of the securing elements can be secured to the spacer by means of form-fitting elements, the securing element (18) having at least one hole (20, 24, 28) and the spacer having at least one projection, **characterised in that** the at least one projection (12) comprises a neck (16) and a head (14), the head having a larger cross-section than the neck, the cross-section of the head being trapezoidal, circular, oval, square-shaped or triangular.

2. The transport lock according to claim 1, **characterised in that** the securing elements are arranged or can be arranged at two opposite ends of the spacer.

3. The transport lock according to claim 1 or 2, **characterised in that** at least one of the securing elements is arranged or can be arranged on the spacer in such a way that an end surface of the spacer is at least partially covered by the securing element, wherein part of the securing element is preferably arranged between the spacer and the dropout when the transport lock is secured to the dropout by means of the securing element.

4. The transport lock according to one of the preceding claims, **characterised in that** the spacer comprises at least two elements that are designed to be length-adjustable in relation to each other and that can be locked and unlocked in multiple positions relative to each other.

5. The transport lock according to claim 4, **characterised in that** one of the elements comprises a plurality of preferably equidistantly arranged openings and the other element comprises a plurality of preferably equidistantly arranged projections which are arranged in such a way that, by rotating the one element relative to the second element about a longitudinal axis, the projections can be engaged with and disengaged from the openings.

6. The transport lock according to claim 4, **characterised in that** the elements comprise form-fitting elements, especially snap-lock elements, which can be engaged with and disengaged from each other without having to rotate the elements relative to each other.

7. The transport lock according to one of the preceding claims, **characterised in that** the securing elements are made of an elastic material, especially silicone or TPU.

8. The transport lock according to one of the preceding claims, **characterised in that** the spacer is made of a plastic that can be injection moulded, preferably a polyamide, especially preferably PA66.

## Revendications

1. Dispositif de sécurité de transport destiné à protéger les pattes d'un logement de roue, dépourvu de roue, d'un vélo, le dispositif de sécurité de transport présentant un écarteur (2) destiné à être disposé entre les pattes, dans lequel
l'écarteur est de longueur variable, et le dispositif de sécurité de transport présente deux éléments de fixation (18) destinés à fixer le dispositif de sécurité de transport respectivement à l'une des pattes,
l'un au moins des éléments de fixation peut être fixé à l'écarteur au moyen d'éléments de coopération de forme,
de préférence, l'élément de fixation (18) dispose d'au moins un trou (20, 24, 28), et l'écarteur dispose d'au moins une saillie (12),
**caractérisé en ce que** ladite au moins une saillie (12) comprend un col (16) et une tête (14), la tête ayant une section transversale plus grande que celle du col, la section transversale de la tête étant de forme trapézoïdale, circulaire, ovale, carrée ou triangulaire.

2. Dispositif de sécurité de transport selon la revendication 1,
**caractérisé en ce que** les éléments de fixation sont disposés ou peuvent être disposés à deux extrémités opposées de l'écarteur.

3. Dispositif de sécurité de transport selon la revendication 1 ou 2, **caractérisé en ce que** l'un au moins des éléments de fixation est disposé ou peut être disposé sur l'écarteur de telle sorte qu'une face frontale de l'écarteur soit au moins partiellement recouverte par l'élément de fixation, de préférence, une partie de l'élément de fixation étant disposée entre l'écarteur et la patte lorsque le dispositif de sécurité de transport est fixé à la patte au moyen de l'élément de fixation.

4. Dispositif de sécurité de transport selon l'une des revendications précédentes,
**caractérisée en ce que** l'écarteur comprend au moins deux éléments qui sont conçus de manière à pouvoir se déplacer longitudinalement l'un par rapport à l'autre et qui peuvent être verrouillés et déverrouillés dans plusieurs positions l'un par rapport à l'autre.

5. Dispositif de sécurité de transport selon la revendication 4,
**caractérisé en ce que** l'un des éléments présente une pluralité d'ouvertures disposées de préférence à équidistance, et l'autre élément présente une pluralité de saillies disposées de préférence à équidistance, qui sont disposées de telle sorte que les saillies peuvent être mises en prise et hors de prise avec les ouvertures par rotation de l'un des éléments par rapport au deuxième élément autour d'un axe longitudinal.

6. Dispositif de sécurité de transport selon la revendication 4,
**caractérisé en ce que** les éléments comportent des éléments de coopération de forme, en particulier des éléments d'enclenchement, qui peuvent être mis en prise et hors de prise les uns avec les autres sans qu'il soit nécessaire de faire tourner les éléments les uns par rapport aux autres.

7. Dispositif de sécurité de transport selon l'une des revendications précédentes,
**caractérisé en ce que** les éléments de fixation sont fabriqués en un matériau élastique, en particulier en silicone ou en TPU.

8. Dispositif de sécurité de transport selon l'une des revendications précédentes,
**caractérisé en ce que** l'écarteur est fabriqué en une matière plastique pouvant être moulée par injection, de préférence en un polyamide, de manière particulièrement préférée en PA66.
